# EUROPEAN PATENT APPLICATION

(11) **EP 4 012 071 A1**
(43) Date of publication of application: **15.06.2022**
(21) Application number: 21214067.7
(22) Date of filing: 13.12.2021
(51) Int. Cl.: C25B 1/042, C25B 9/75, C25B 11/069, C25B 11/073, H01M 4/86, H01M 8/1213, H01M 8/1246, C25B 11/053, H01M 4/90, H01M 8/12, H01M 8/18

(54) **SOLID OXIDE ELECTROLYZER CELL INCLUDING ELECTROLYSIS-TOLERANT AIR-SIDE ELECTRODE**

(30) Priority: 14.12.2020 US 202017120426
(71) Applicant: Bloom Energy Corporation, San Jose, CA 95134 (US)
(72) Inventor: Armstrong, Tad, Burlingame, CA (US)
(74) Representative: Wichmann, Hendrik

(57) **Abstract**

A solid oxide electrolyzer cell (SOEC) includes a solid oxide electrolyte, a fuel-side electrode disposed on a fuel side of the electrolyte, and an air-side electrode disposed on an air side of the electrolyte. The air-side electrode includes a barrier layer disposed on the air side of the electrolyte and containing a stabilized zirconia material having a lower electrical conductivity than an electrical conductivity of the electrolyte, and a functional layer disposed on the barrier layer.

## Description

The present disclosure is directed generally to solid oxide electrolyzer cells, and more specifically, to electrolyzer cells including electrolysis-tolerant air-side electrodes.

### BACKGROUND

Solid oxide reversible fuel cell (SORFC) systems may be operated in a fuel cell mode to generate electricity by oxidizing a fuel. SORFC systems may also be operated in an electrolysis mode to generate hydrogen by electrolyzing water. However, prior art SORFCs may suffer from air-side electrode degradation due to cell voltage increases that may occur during the electrolysis process.

### SUMMARY

According to various embodiments, a solid oxide electrolyzer cell (SOEC) includes a solid oxide electrolyte, a fuel-side electrode disposed on a fuel side of the electrolyte, and an air-side electrode disposed on an air side of the electrolyte. The air-side electrode includes a barrier layer disposed on the air side of the electrolyte and containing a stabilized zirconia material having a lower electrical conductivity than an electrical conductivity of the electrolyte, and a functional layer disposed on the barrier layer.

### BRIEF DESCRIPTION OF THE DRAWINGS

FIG. 1A is a perspective view of a SOEC stack, according to various embodiments of the present disclosure.
FIG. 1B is a cross-sectional view of a portion of the stack of FIG. 1A.
FIG. 2A is a plan view of an air side of an interconnect, according to various embodiments of the present disclosure.
FIG. 2B is a plan view of a fuel side of the interconnect of FIG. 2A.
FIG. 3A is a plan view of an air side of a SOEC cell, according to various embodiments of the present disclosure.
FIG. 3B is a plan view of a fuel side of the SOEC cell of FIG. 3A.
FIG. 4 is a photograph showing air electrode delamination.
FIG. 5 is a cross-sectional view of a SOEC stack including an electrolysis-tolerant SOEC cell, according to various embodiments of the present disclosure.
FIG. 6 is a chart showing the voltage response for exemplary and comparative SOEC cells.

### DETAILED DESCRIPTION

The various embodiments will be described in detail with reference to the accompanying drawings. Wherever possible, the same reference numbers will be used throughout the drawings to refer to the same or like parts. References made to particular examples and implementations are for illustrative purposes, and are not intended to limit the scope of the invention or the claims.

It will be understood that when an element or layer is referred to as being "on" or "connected to" another element or layer, it can be directly on or directly connected to the other element or layer, or intervening elements or layers may be present. In contrast, when an element is referred to as being "directly on" or "directly connected to" another element or layer, there are no intervening elements or layers present. It will be understood that for the purposes of this disclosure, "at least one of X, Y, and Z" can be construed as X only, Y only, Z only, or any combination of two or more items X, Y, and Z (e.g., XYZ, XYY, YZ, ZZ).

Where a range of values is provided, it is understood that each intervening value, to the tenth of the unit of the lower limit unless the context clearly dictates otherwise, between the upper and lower limit of that range and any other stated or intervening value in that stated range is encompassed within the invention. The upper and lower limits of these smaller ranges may independently be included in the smaller ranges is also encompassed within the invention, subject to any specifically excluded limit in the stated range. Where the stated range includes one or both of the limits, ranges excluding either or both of those included limits are also included in the invention. It will also be understood that the term "about" may refer to a minor measurement errors of, for example, 5 to 10%. In addition, weight percentages (wt%) and atomic percentages (at%) as used herein respectively refer to a percent of total weight or a percent of a total number of atoms of a corresponding composition.

Words such as "thereafter," "then," "next," etc. are not necessarily intended to limit the order of the steps; these words may be used to guide the reader through the description of the methods. Further, any reference to claim elements in the singular, for example, using the articles "a," "an" or "the" is not to be construed as limiting the element to the singular.

The term "electrolyzer cell stack," as used herein, means a plurality of stacked electrolyzer cells that can optionally share a common water inlet and exhaust passages or risers. The "electrolyzer cell stack," as used herein, includes a distinct electrical entity which contains two end plates which are connected directly to power conditioning equipment and the power (i.e., electricity) input of the stack or comprises a portion of an electrolyzer cell column that contains terminal plates which provide electrical input.

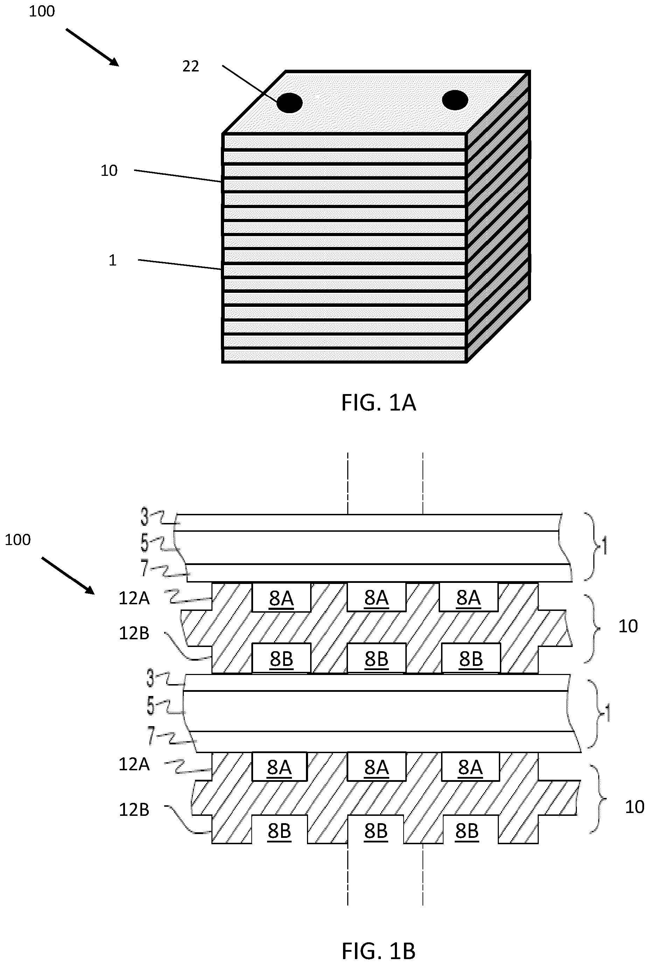

FIG. 1A is a perspective view of an electrolyzer cell stack 100, and FIG. 1B is a sectional view of a portion of the stack 100, according to various embodiments of the present disclosure. Referring to FIGS. 1A and 1B, the stack 100 may be a solid oxide electrolyzer cell (SOEC) stack that includes solid oxide electrolyzer cells 1 separated by interconnects 10. Referring to FIG. 1B, each electrolyzer cell 1 comprises an air-side electrode 3, a solid oxide electrolyte 5, and a fuel-side electrode 7.

Electrolyzer cell stacks are frequently built from a multiplicity of electrolyzer cells 1 in the form of planar elements, tubes, or other geometries. Although the electrolyzer cell stack 100 in FIG. 1 is vertically oriented, electrolyzer cell stacks may be oriented horizontally or in any other direction. For example, water may be provided through water conduits 22 (e.g., water riser openings) formed in each interconnect 10 and electrolyzer cell 1, while oxygen may be provided from the side of the stack between air side ribs of the interconnects 10.

Various materials may be used for the air-side electrode 3, solid oxide electrolyte 5, and fuel-side electrode 7. For example, the fuel-side electrode 7 may comprise a cermet layer comprising a metal-containing phase and a ceramic phase. The metal-containing phase may include a metal catalyst, such as nickel (Ni), cobalt (Co), copper (Cu), alloys thereof, or the like, which operates as an electron conductor. The metal catalyst may be in a metallic state or may be in an oxide state. For example, the metal catalyst forms a metal oxide when it is in an oxidized state. Thus, the fuel-side electrode 7 may be annealed in a reducing atmosphere prior to operation of the electrolyzer cell 1, to reduce the oxidized metal catalyst to a metallic state.

The metal-containing phase may consist entirely of nickel in a reduced state. This nickel-containing phase may form nickel oxide when it is in an oxidized state. Thus, the fuel-side electrode 7 is preferably annealed in a reducing atmosphere prior to operation to reduce the nickel oxide to nickel.

The ceramic phase of the fuel-side electrode 7 may include, but is not limited to gadolinia-doped ceria (GDC), samaria-doped ceria (SDC), ytterbia-doped ceria (YDC), scandia-stabilized zirconia (SSZ), ytterbia-ceria-scandia-stabilized zirconia (YbCSSZ), or the like. In the YbCSSZ, scandia may be present in an amount equal to 9 to 11 mol %, such as 10 mol %, ceria may present in amount greater than 0 (e.g., at least 0.5 mol %) and equal to or less than 2.5 mol %, such as 1 mol %, and at least one of yttria and ytterbia may be present in an amount greater than 0 and equal to or less than 2.5 mol %, such as 1 mol %, as disclosed in U.S. Pat. No. 8,580,456, which is incorporated herein, by reference.

The solid oxide electrolyte 5 may comprise a stabilized zirconia, such as scandia-stabilized zirconia (SSZ), yttria-stabilized zirconia (YSZ), scandia-ceria-stabilized zirconia (SCSZ), scandia-ceria-yttria-stabilized zirconia (SCYSZ), scandia-ceria-ytterbia-stabilized zirconia (SCYbSZ), or the like. Alternatively, the electrolyte 5 may comprise another ionically conductive material, such as a samaria-doped ceria (SDC), gadolinia-doped ceria (GDC), or yttria-doped ceria (YDC).

The air-side electrode 3 may comprise a layer of an electrically conductive material, such as an electrically conductive perovskite material, such as lanthanum strontium manganite (LSM). Other conductive perovskites, such as lanthanum strontium cobaltite (LSC), lanthanum strontium cobalt manganite (LSCM), lanthanum strontium cobalt ferrite (LSCF), lanthanum strontium ferrite (LSF), La_{0.85}Sr_{0.15}Cr_{0.9}Ni_{0.1}O₃ (LSCN), etc., or metals, such as Pt, may also be used.

In some embodiments, the air-side electrode 3 may comprise a mixture of the electrically conductive material and an ionically conductive material. For example, the air-side electrode 3 may include from about 10 wt% to about 90 wt% of the electrically conductive material described above, (e.g., LSM, etc.) and from about 10 wt% to about 90 wt% of the ionically conductive material. Suitable ionically conductive materials include zirconia-based and/or ceria based materials. For example, the ionically conductive material may comprise scandia-stabilized zirconia (SSZ), ceria, and at least one of yttria and ytterbia. In some embodiments, the ionically conductive material may be represented by the formula: (ZrO₂)_{1-w-x-z}(SC₂O₃)_{w}(CeO₂)ₓ(Y₂O₃),(Yb₂O₃)_{b}, wherein 0.09 ≤ w ≤ 0.11, 0 < x ≤ 0.0125, a + b = z, and 0.0025 ≤ z ≤ 0.0125. In some embodiments, 0.009 < x ≤ 0.011 and 0.009 ≤ z ≤ 0.011, and optionally either a or b may equal to zero if the other one of a or b does not equal to zero.

Furthermore, if desired, additional contact or current collector layers may be placed over the air-side electrode 3 and the fuel-side electrodes 7. For example, a Ni or nickel oxide anode contact layer and an LSM or LSCo cathode contact layer may be formed on the fuel-side electrode 7 and the air-side electrode 3, respectively.

Each interconnect 10 electrically connects adjacent electrolyzer cells 1 in the stack 100. In particular, an interconnect 10 may electrically connect the fuel-side electrode 7 of one electrolyzer cell 1 to the air-side electrode 3 of an adjacent electrolyzer cell 1. FIG. 1B shows that the lower electrolyzer cell 1 is located between two interconnects 10. A Ni mesh (not shown) may be used to electrically connect the interconnect 10 to the fuel-side electrode 7 of an adjacent electrolyzer cell 1.

Each interconnect 10 includes fuel-side ribs 12A that at least partially define fuel channels 8A and air-side ribs 12B that at least partially define oxidant (e.g., air) channels 8B. The interconnect 10 may operate as a separator that separates water flowing to the fuel-side electrode of one cell 1 in the stack from oxygen flowing from the air-side electrode of an adjacent cell 1 in the stack. At either end of the stack 100, there may be an air end plate or fuel end plate (not shown).

Each interconnect 10 may be made of or may contain electrically conductive material, such as a metal alloy (e.g., chromium-iron alloy) which has a similar coefficient of thermal expansion to that of the solid oxide electrolyte in the cells (e.g., a difference of 0-10%). For example, the interconnects 10 may comprise a metal (e.g., a chromium-iron alloy, such as 4-6 weight percent iron (e.g., 5 wt% iron), optionally 1 or less weight percent yttrium and balance chromium alloy), and may electrically connect the fuel-side electrode 7 of one electrolyzer cell 1 to the air-side electrode 3 of an adjacent electrolyzer cell 1.

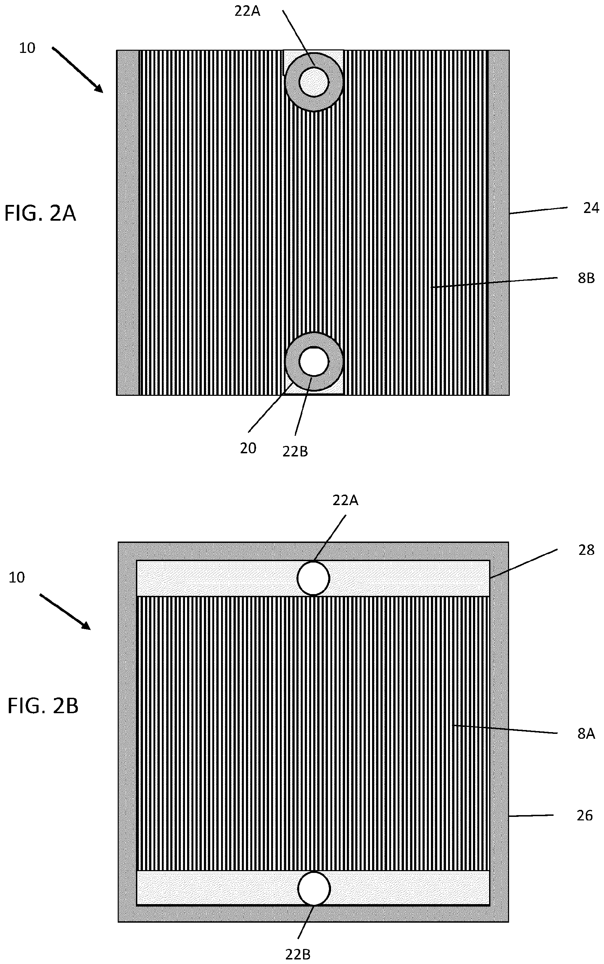

FIG. 2A is a top view of the air side of the interconnect 10, and FIG. 2B is a top view of a fuel side of the interconnect 10, according to various embodiments of the present disclosure. Referring to FIGS. 1B and 2A, the air side includes the air channels 8B that extend from opposing first and second edges of the interconnect 10. Oxygen flows through the air channels 8B from the air-side electrode 3 of an adjacent electrolyzer cell 1. Ring seals 20 may surround fuel holes 22A, 22B of the interconnect 10, to prevent water from contacting the air-side electrode 3. Strip-shaped peripheral seals 24 are located on peripheral portions of the air side of the interconnect 10. The seals 20, 24 may be formed of a glass or glass-ceramic material. The peripheral portions may be an elevated plateau which does not include ribs or channels. The surface of the peripheral regions may be coplanar with tops of the ribs 12B.

Referring to FIGS. 1B and 2B, the fuel side of the interconnect 10 may include the fuel channels 8A and fuel manifolds 28. Water flows from one of the fuel holes 22A (e.g., inlet fuel hole that forms part of the fuel inlet riser), into the adjacent manifold 28, through the fuel channels 8A, and to the fuel-side electrode 7 of an adjacent electrolyzer cell 1. Excess water may flow into the other fuel manifold 28 and then into the outlet fuel hole 22B. A frame seal 26 is disposed on a peripheral region of the fuel side of the interconnect 10. The peripheral region may be an elevated plateau which does not include ribs or channels. The surface of the peripheral region may be coplanar with tops of the ribs 12A.

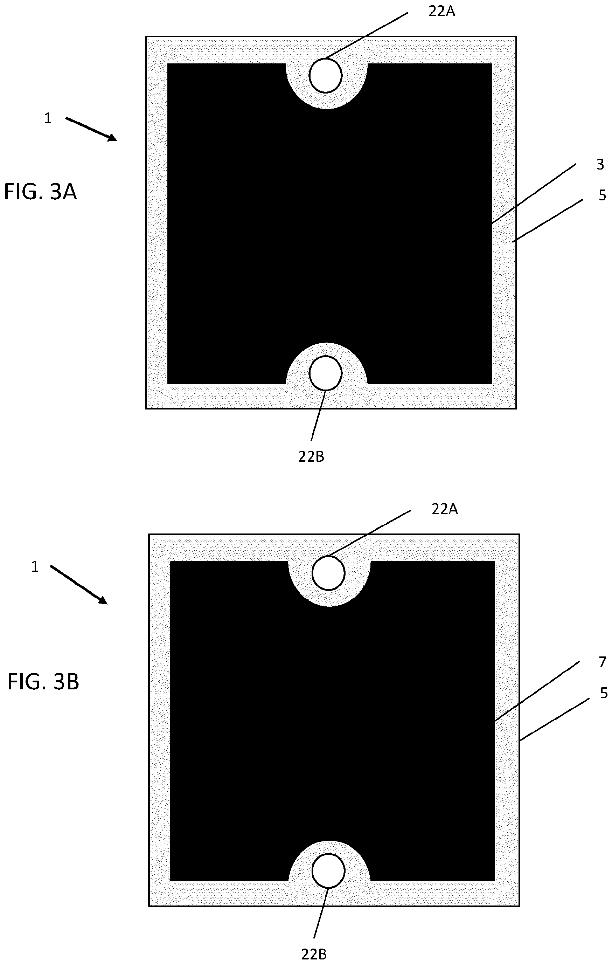

FIG. 3A is a plan view of the air side of the electrolyzer cell 1, and FIG. 3B is a plan view of the fuel side of the electrolyzer cell 1, according to various embodiments of the present disclosure. Referring to FIGS. 1A, 2A, 3A, and 3B, the electrolyzer cell 1 may include an inlet fuel hole 22A, an outlet fuel hole 22B, the electrolyte 5, and the air-side electrode 3. The air-side electrode 3 may be disposed on the air side of the electrolyte 5. The fuel-side electrode 7 may be disposed on an opposing fuel (e.g., water) side of the electrolyte 5.

The fuel holes 22A, 22B may extend through the electrolyte 5 and may be arranged to overlap with the fuel holes 22A, 22B of the interconnects 10, when assembled in the electrolyzer cell stack 100. The air-side electrode 3 may be printed on the electrolyte 5 so as not to overlap with the ring seals 20 and the peripheral seals 24 when assembled in the electrolyzer cell stack 100. The fuel-side electrode 7 may have a similar shape as the air-side electrode 3. The fuel-side electrode 7 may be disposed so as not to overlap with the frame seal 26, when assembled in the stack 100. In other words, the electrodes 3 and 7 may be recessed from the edges of the electrolyte 5, such that corresponding edge regions of the electrolyte 5 may directly contact the corresponding seals 20, 24, 26.

In one embodiment, the electrolyzer cell stack 100 may only be operated in the electrolysis mode. Thus the electrolyzer cell stack 100 is not operated in a fuel cell mode to generate power from a fuel and air provided to fuel-side and air-side electrodes, respectively. Alternatively, the electrolyzer cell stack 100 may comprise a solid oxide regenerative (i.e., reversible) fuel cell (SORFC) stack. SORFCs can be operated in a fuel cell (FC) mode (e.g., power generation mode), in order to generate electricity from fuel and air provided to fuel-side and air-side electrodes, respectively, and may be operated in an electrolyzer cell (EC) mode (e.g., electrolysis mode) in order to produce hydrogen and oxygen from water provided to the fuel-side electrode 7. In the FC mode, oxygen ions are transported from the air-side (e.g., cathode) electrode 3 to the fuel-side (e.g., anode) electrode 7 of the SORFC to oxidize the fuel (e.g., hydrogen and/or hydrocarbon fuel, such as natural gas) and to generate electricity. In EC mode, a positive potential is applied to the air side of the cell, and the oxygen ions are transported from the water at the fuel-side electrode 7 through the electrolyte 5 to the air-side electrode 3. Thus, water is electrolyzed into hydrogen at the fuel-side electrode 7 and oxygen at air-side electrode 3.

The air-side electrode 3 and the fuel-side electrode 7 of a SORFC respectively operate as a cathode and an anode during FC mode, and respectively operate as an anode and a cathode during EC mode (i.e., a FC mode cathode is an EC mode anode, and a FC mode anode is an EC mode cathode). Accordingly, the SORFCs described herein may be referred to as having air-side electrodes and fuel-side electrodes.

During the EC mode, water in the fuel stream is reduced (H₂O + 2e→O₂⁻ + H₂) to form H₂ gas and O₂⁻ ions, the O₂⁻ ions are transported through the solid electrolyte, and then oxidized on the air-side electrode (O₂⁻ oxidized to O₂) to produce molecular oxygen. Since the open circuit voltage for a SORFC operating with air and wet fuel (e.g., hydrogen and/or reformed natural gas) may be from about 0.9 to 1.0V (depending on water content), the positive voltage applied to the air-side electrode in EC mode increases the cell voltage to typical operating voltages of from about 1.1 to 1.3V. In constant current mode, the cell voltages may increase over time if there is degradation of the cell, which may result from both ohmic sources and electrode polarization.

One of the major hurdles encountered with state-of-the-art solid oxide electrolyzer cells and SORFCs is the delamination of the air electrode at high current densities. The degree of delamination increases with the current density and the flux of oxide ion transport. Without wishing to be bound by a particular theory, it is believed that the delamination may be caused by the precipitation of oxygen at the electrolyte/cathode interface, which can lead to high pressures resulting in air electrode delamination.

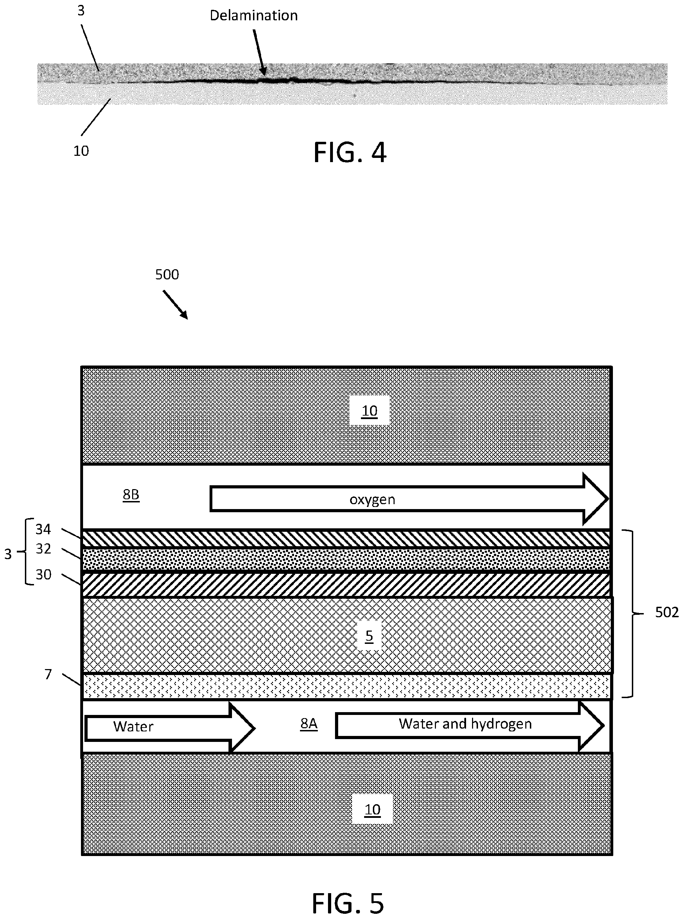

FIG. 4 is a photograph showing air electrode 3 delamination after operating a solid oxide electrolyzer cell in electrolysis mode for an extended time at a high current density. As shown in FIG. 4, the air-side electrode 3 may separate from the underlying electrolyte 5, as indicated by the black area there between.

FIG. 5 is a cross-sectional view of an electrolyzer cell stack 500 including an electrolysis-tolerant solid oxide electrolyzer cell 502, according to various embodiments of the present disclosure. The electrolyzer cell stack 500 is similar to the stack 100 of FIGS. 1A-3B. As such, only the differences there between will be discussed in detail.

Referring to FIG. 5, the electrolyzer cell stack 500 may include at least one electrolyzer cell 502 disposed between interconnects 10. The electrolyzer cell 502 may operate only in the electrolysis mode (e.g., the cell may comprise a solid oxide electrolyzer cell (SOEC)), or may operate in both fuel cell and electrolysis modes (e.g., the cell 502 may comprise a SORFC). The electrolyzer cell 502 includes a solid oxide electrolyte 5, an air-side electrode 3 disposed on an air side of the electrolyte 5, and a fuel-side electrode 7 disposed on a fuel side of the electrolyte 5. Air may be provided to the air-side electrode 3 by air channels 8B in a fuel cell mode, and fuel may be provided to the fuel-side electrode 7 by fuel channels 8A in the fuel cell mode, while water may be provided to the fuel-side electrode 7 by fuel channels 8A in the electrolysis mode.

In various embodiments, the electrolyte 5 may include an ionically conductive material or phase, such as a stabilized zirconia material as described above, such as SSZ, YSZ, SCSZ, SCYSZ, SCYbSZ, or the like. Alternatively, the electrolyte 5 may comprise another ionically conductive material, such as doped ceria, including scandia, gadolinia or yttria doped ceria (i.e., SDC, GDC or YDC). In some embodiments, the electrolyte 5 may comprise a material represented by the formula:
(ZrO₂)_{1-w-x-z}(Sc₂O₃)_{w}(CeO₂)ₓ(Y₂O₃)ₐ(Yb₂O₃)_{b}, wherein 0.09 ≤ w ≤ 0.11, 0 < x ≤ 0.0125, a + b = z, and 0.0025 ≤ z ≤ 0.0125. In some embodiments, the electrolyte 5 may comprise (ZrO₂)_{0.88}(Sc₂O₃)_{0.1}(CeO₂)_{0.01}(Yb₂O₃)_{0.01} or (ZrO₂)_{0.88}(Sc₂O₃)_{0.1}(CeO₂)_{0.01}(Y₂O₃)_{0.01}. Alternatively, the electrolyte 5 may comprise (ZrO₂)_{0.89}(Sc₂O₃)_{0.1}(CeO₂)_{0.01}.

The air-side electrode 3 may include a barrier layer 30 disposed on an air side of the electrolyte 5, a functional layer 32 disposed on the barrier layer 30, and an optional current collector layer 34 disposed on the functional layer 32. The functional layer 32 may include a mixture of an electrically conductive material and an ionically conductive material. For example, the functional layer 32 may include from about 10 weight percent (wt%) to about 90 wt% of the electrically conductive material described above, (e.g., LSM, LSC, LSCM, LSCF, LSF, LSCN, Pt, etc.) and from about 10 wt% to about 90 wt% of the ionically conductive material. Suitable ionically conductive materials include zirconia-based based materials. For example, the ionically conductive material may comprise yttria-stabilized zirconia (YSZ) or scandia-stabilized zirconia (SSZ) including at least one of yttria and/or ytterbia and optionally ceria. In some embodiments, the ionically conductive material may be represented by the formula: (ZrO₂)_{1-w-x-z}(Sc₂O₃)_{w}(CeO₂)ₓ(Y₂O₃)ₐ(Yb₂O₃)_{b}, wherein 0 ≤ w ≤ 0.11, 0 ≤ x ≤ 0.0125, a + b = z, and 0.0025 ≤ z ≤ 0.11. In some embodiments, 0 ≤ x ≤ 0.011 and 0.009 ≤ z ≤ 0.0125, and optionally, one of a or b may be equal to zero, if the other one of a or b is not equal to zero.

In some embodiments, the functional layer 32 may include a mixture of LSM and at least one of SSZ, YSZ, scandia-ceria-ytterbia-stabilized zirconia (SCYbSZ), scandia-ceria-yttria-stabilized zirconia (SCYSZ), scandia-yttria-stabilized zirconia (SYSZ) or scandia-ytterbia-stabilized zirconia (SYbSZ). For example, YSZ may include 8 to 11 at% Y₂O₃ and 89 to 92 at% ZrO₂, such as about 8 at% Y₂O₃ and about 92 at% ZrO₂. SYSZ may include about 10 at% Sc₂O₃, about 1 at% Y₂O₃, and about 89 at% ZrO₂. SCYbSZ may include about 10 at% Sc₂O₃, about 1 at% CeO₂, about 1 at% Yb₂O₃, and about 88 at% ZrO₂.

The current collector layer 34 may include an electrically conductive material, such as an electrically conductive metal oxide, such as LSM. However, other conductive perovskites, such as LSC, LSCM, LSCF, LSF, LSCN, etc., or metals, such as Pt, may also be used.

The barrier layer 30 may be sintered to the air-side of the electrolyte 5 and may include at least about 95 at% of an ionically conductive material, such as from about 97 at% to about 100 at%, or from about 98 at% to about 100 at% of an ionically conductive material. The barrier layer 30 may have a relatively high ionic conductivity and a relatively low electrical conductivity. For example, the barrier layer 30 may be free of, or contain no more than a trace amount of an electrically conductive material. For example, the barrier layer 30 may comprise less than 1 at%, such as from 0 to 0.5 at%, or from 0 to 0.25 at% of an electrically material, such as a metal or electrically conductive oxide, such LSM, LSC, LSCM, LSCF, LSF, and LSCN, and less than 1 at%, such as from 0 to 0.5 at%, or from 0 to 0.25 at% ceria.

In some embodiments, the barrier layer 30 may have a lower electric conductivity than the electrolyte 5. While not wishing to be bound to any particular theory, the present inventors believe that such an electrical conductivity difference may operate to prevent and/or reduce an over-potential (e.g., increase in cell voltage) when the electrolyzer cell 500 is operated in EC mode. It is believed that preventing and/or reducing such a cell over-potential reduces and/or prevents delamination of the air-side electrode 3 during EC operation.

In some embodiments, the barrier layer 30 may include a stabilized or partially stabilized zirconia (ZrO₂) material, such as a rare earth stabilized (e.g., doped) zirconia, such as scandia (Sc₂O₃) stabilized zirconia (SSZ), a yttria (Y₂O₃) stabilized zirconia (YSZ), and/or ytterbia (Yb₂O₃) stabilized zirconia (YbSZ). In various embodiments, the barrier layer 30 may include zirconia stabilized with any combination of yttria, ytterbia, and/or scandia. For example, the barrier layer 30 may include scandia-yttria-stabilized zirconia (SYSZ) or scandia-ytterbia-stabilized zirconia (SYbSZ). In other embodiments, the barrier layer 30 may include zirconia stabilized or doped with Mg, Ca, La, and/or oxides thereof.

In some embodiments, the barrier layer 30 may include a YSZ material represented by the formula: (ZrO₂)₁₋ₓ(Y₂O₃)ₓ, wherein x ranges from 0.02 to 0.12, such as from 0.08 to 0.11. In some embodiments, the barrier layer 30 may include a partially stabilized YSZ material represented by the formula: (ZrO₂)₁₋ₓ(Y₂O₃)ₓ, wherein x ranges from 0.02 to 0.07, such as from 0.03 to 0.05.

Alternatively, the barrier layer 30 may include a SYSZ material represented by the formula: (ZrO₂)_{0.9+y-x}(Sc₂O₃)_{0.1-y}(Y₂O₃)ₓ, wherein y ranges from 0 to 0.05, and x ranges from 0.01 to (0.05+y). In some embodiments, the barrier layer 30 may include a SYSZ material represented by the formula: (ZrO₂)_{0.9-x}(Sc₂O₃)_{0.1}(Y₂O₃)ₓ, wherein x ranges from 0.005 to 0.1, such as from 0.01 to 0.05. For example, the SYSZ material may comprise (ZrO₂)_{0.89}(Sc₂O₃)_{0.1}(Y₂O₃)_{0.01}. In general, the 10 mol% scandia doped zirconia with 1 to 5 mol% yttria doping may include 89 mol% ZrO₂- 10 mol% Sc₂O₃ - 1mol% Y₂O₃, 88 mol% ZrO₂ - 10 mol% Sc₂O₃ - 2 mol% Y₂O₃, 87 mol% ZrO₂ - 10 mol% Sc₂O₃ - 3 mol% Y₂O₃, 86 mol% ZrO₂ - 10 mol% Sc₂O₃ - 4 mol% Y₂O₃, or 85 mol% ZrO₂ - 10 mol% Sc₂O₃ - 5 mol%

Y₂O₃ compositions.

In some embodiments, the barrier layer 30 may include a SYSZ material represented by the formula: (ZrO₂)_{0.91-x}(Sc₂O₃)_{0.09}(Y₂O₃)ₓ, wherein x ranges from 0.005 to 0.1, such as from 0.01 to 0.06. For example, the SYSZ material may comprise (ZrO₂)_{0.89}(Sc₂O₃)_{0.09}(Y₂O₃)_{0.02}. In general, the 9 mol% scandia doped zirconia with 1 to 6 mol% yttria doping may include 90 mol% ZrO₂- 9 mol% Sc₂O₃ - 1mol% Y₂O₃, 89 mol% ZrO₂ - 9 mol% Sc₂O₃ - 2 mol% Y₂O₃, 88 mol% ZrO₂ - 9 mol% Sc₂O₃ - 3 mol% Y₂O₃, 87 mol% ZrO₂- 9 mol% Sc₂O₃ - 4 mol% Y₂O₃, 86 mol% ZrO₂- 9 mol% Sc₂O₃ - 5 mol% Y₂O₃ or 85 mol% ZrO₂ - 9 mol% Sc₂O₃ - 6 mol% Y₂O₃ compositions.

Alternatively, the barrier layer 30 may include a SYbSZ material represented by the formula: (ZrO₂)_{0.9+y-x}(Sc₂O₃)_{0.1-y}(Yb₂O₃)ₓ, wherein y ranges from 0 to 0.05, and x ranges from 0.01 to (0.05+y). In some embodiments, the barrier layer 30 may include a SYbSZ material represented by the formula: (ZrO₂)_{0.9-x}(Sc₂O₃)_{0.1}(Yb₂O₃)ₓ, wherein x ranges from 0.005 to 0.1, such as from 0.01 to 0.05. For example, the SYbSZ material may comprise (ZrO₂)_{0.89}(Sc₂O₃)_{0.1}(Yb₂O₃)_{0.01}. In general, the 10 mol% scandia doped zirconia with 1 to 5 mol% ytterbia doping may include 89 mol% ZrO₂ - 10 mol% Sc₂O₃ - 1mol% Yb₂O₃, 88 mol% ZrO₂ - 10 mol% Sc₂O₃ - 2 mol% Yb₂O₃, 87 mol% ZrO₂ - 10 mol% Sc₂O₃ - 3 mol% Yb₂O₃, 86 mol% ZrO₂ - 10 mol% Sc₂O₃ - 4 mol% Yb₂O₃, or 85 mol% ZrO₂ - 10 mol% Sc₂O₃ - 5 mol% Yb₂O₃ compositions.

In some embodiments, the barrier layer 30 may include a SYbSZ material represented by the formula: (ZrO₂)_{0.91-x}(Sc₂O₃)_{0.09}(Yb₂O₃)ₓ, wherein x ranges from 0.005 to 0.1, such as from 0.01 to 0.06. For example, the SYbSZ material may comprise (ZrO₂)_{0.89}(Sc₂O₃)_{0.09}(Yb₂O₃)_{0.02}. In general, the 9 mol% scandia doped zirconia with 1 to 6 mol% ytterbia doping may include 90 mol% ZrO₂ - 9 mol% Sc₂O₃ - 1mol% Yb₂O₃, 89 mol% ZrO₂ - 9 mol% Sc₂O₃ - 2 mol% Yb₂O₃, 88 mol% ZrO₂ - 9 mol% Sc₂O₃ - 3 mol% Yb₂O₃, 87 mol% ZrO₂ - 9 mol% Sc₂O₃ - 4 mol% Yb₂O₃, 86 mol% ZrO₂ - 9 mol% Sc₂O₃ - 5 mol% Yb₂O₃ or 85 mol% ZrO₂ - 9 mol% Sc₂O₃ - 6 mol% Yb₂O₃ compositions.

In some embodiments, the barrier layer 30 may include 10 mol% scandia doped zirconia with 1-5 mol% Y₂O₃ or Yb₂O₃ doping, 9 mol% scandia doped zirconia with 1-6 mol% Y₂O₃ or Yb₂O₃ doping, 8 mol% scandia doped zirconia with 1-7 mol% Y₂O₃ or Yb₂O₃ doping, 7 mol% scandia doped zirconia with 1-8 mol% Y₂O₃ or Yb₂O₃ doping, 6 mol% scandia doped zirconia with 1-9 mol% Y₂O₃ or Yb₂O₃ doping, or 5 mol% scandia doped zirconia with 1-10 mol% Y₂O₃ or Yb₂O₃ doping.

### Non-Limiting Examples

Solid oxide electrolyzer cells of types A-G were fabricated and included air-side electrodes having functional layer and optionally barrier layer materials shown below in Table 1:

**Table 1**

| Cell Type | Barrier Layer | Functional layer |
|---|---|---|
| A | None | (ZrO₂)_{0.89}(Sc₂O₃)_{0.1}(Y₂O₃)_{0.01} + LSM |
| B | None | (ZrO₂)_{0.92}(Y₂O₃)_{0.08} + LSM |
| C | (ZrO₂)_{0.89}(Sc₂O₃)_{0.1}(Y₂O₃)_{0.01} | (ZrO₂)_{0.88}(Sc₂0₃)_{0.1}(CeO₂)_{0.01}(Yb₂O₃)_{0.01} + LSM |
| D | (ZrO₂)_{0.92}(Y₂O₃)_{0.08} | (ZrO₂)_{0.88}(Sc₂O₃)_{0.1}(CeO₂)_{0.01} (Yb₂O₃)_{0.01} + LSM |
| E | (ZrO₂)_{0.89}(Sc₂O₃)_{0.1}(Y₂O₃)_{0.01} | (ZrO₂)_{0.89}(Sc₂O₃)_{0.1} (Y₂O₃)_{0.01} + LSM |
| F | (ZrO₂)_{0.92}(Y₂O₃)_{0.08} | (ZrO₂)_{0.92}(Y₂O₃)_{0.08} + LSM |
| G | None | (ZrO₂)_{0.88}(Sc₂O₃)_{0.1}(CeO₂)_{0.01}(Yb₂O₃)_{0.01} + LSM |

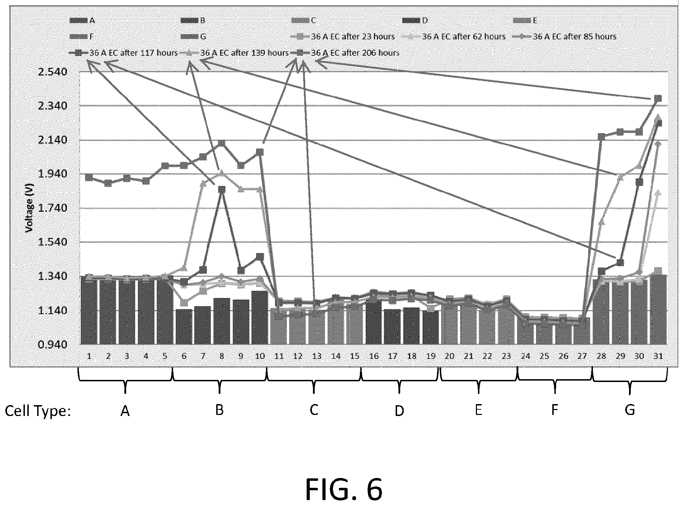

Each cell included an electrolyte comprising (ZrO₂)_{0.88}(Sc₂O₃)_{0.1}(CeO₂)_{0.01}(Yb₂O₃)_{0.01}. An electrolyzer cell stack was assembled including multiple cells of each of cell types A-G. The stack was tested in EC mode at a temperature of 850 °C at a current of 36 Amps. FIG. 6 is a chart showing the voltage response for each cell type. The lines show the cell voltage after 23, 62, 85, 117, 139 and 206 hours, respectively.

As shown in FIG. 6, comparative Cell Types A, B, and G, which did not have a barrier layer, exhibited an increase in cell voltage (and thus increase in cell over-potential) after 206 hours of operation. However, exemplary Cell Types C-F, which all had a barrier layer that includes primarily an ionically conductive oxide material of the embodiments of the present disclosure, remained relatively stable at 206 hours of operation.

Although the foregoing refers to particular preferred embodiments, it will be understood that the invention is not so limited. It will occur to those of ordinary skill in the art that various modifications may be made to the disclosed embodiments and that such modifications are intended to be within the scope of the invention. All of the publications, patent applications and patents cited herein are incorporated herein by reference in their entirety.

### The invention also refers to the following embodiments, wherein the term "claim" means "embodiment":

1. A solid oxide electrolyzer cell (SOEC) comprising:
   a solid oxide electrolyte;
   a fuel-side electrode disposed on a fuel side of the electrolyte; and
   an air-side electrode disposed on an air side of the electrolyte, the air-side electrode comprising:
      a barrier layer disposed on the air side of the electrolyte and comprising a stabilized zirconia material having a lower electrical conductivity than an electrical conductivity of the electrolyte; and
      a functional layer disposed on the barrier layer.
2. The SOEC of claim 1, wherein:
   the functional layer comprises at least 10 weight percent (wt%) electrically conductive material and at least 10 wt% ionically conductive material;
   the barrier layer comprises less than 1 atomic percent (at%) of the electrically conductive material; and
   the barrier layer has a lower electrical conductivity than the functional layer.
3. The SOEC of claim 2, wherein:
   the ionically conductive material of the functional layer comprises a stabilized zirconia material; and
   the electrically conductive material comprises a metal or an electrically conductive metal oxide.
4. The SOEC of claim 3, wherein:
   the stabilized zirconia material of the functional layer is stabilized with scandia, ceria, yttria, ytterbia, or any combination thereof; and
   the electrically conductive material comprises lanthanum strontium manganite.
5. The SOEC of claim 4, wherein:
   the stabilized zirconia material of the barrier layer is stabilized with scandia, yttria, ytterbia, or any combination thereof; and
   the barrier layer comprises 0 to 0.5 at% of the electrically conductive material and 0 to 1 at% ceria.
6. The SOEC of claim 1, wherein the stabilized zirconia material of the barrier layer is represented by a formula: (ZrO₂)_{0.9+y-x}(Sc₂O₃)_{0.1-y}(Y₂O₃)ₓ, wherein:
   y ranges from 0 to 0.05, and
   x ranges from 0.01 to (0.05+y).
7. The SOEC of claim 6, wherein the stabilized zirconia material of the barrier layer is represented by the formula: (ZrO₂)_{0.9-x}(Sc₂O₃)_{0.1}(Y₂O₃)ₓ, wherein x ranges from 0.01 to 0.05.
8. The SOEC of claim 7, wherein the stabilized zirconia material of the barrier layer comprises (ZrO₂)_{0.89}(Sc₂O₃)_{0.1}(Y₂O₃)_{0.01}.
9. The SOEC of claim 6, wherein the stabilized zirconia material of the barrier layer is represented by the formula: (ZrO₂)_{0.91-x}(Sc₂O₃)_{0.09}(Y₂O₃)ₓ, wherein x ranges from 0.01 to 0.06.
10. The SOEC of claim 1, wherein the stabilized zirconia material of the barrier layer is represented by a formula: (ZrO₂)_{0.9+y-x}(Sc₂O₃)_{0.1-y}(Yb₂O₃)ₓ, wherein:
   y ranges from 0 to 0.05, and
   x ranges from 0.01 to (0.05+y).
11. The SOEC of claim 1, wherein the stabilized zirconia material of the barrier layer is represented by a formula: (ZrO₂)₁₋ₓ(Y₂O₃)ₓ, wherein x ranges from 0.02 to 0.12.
12. The SOEC of claim 11, wherein the stabilized zirconia material of the barrier layer is represented by the formula: (ZrO₂)₁₋ₓ(Y₂O₃)ₓ, wherein x ranges from 0.08 to 0.11.
13. The SOEC of claim 12, wherein the stabilized zirconia material of the barrier layer comprises (ZrO₂)_{0.92}(Y₂O₃)_{0.08}.
14. The SOEC of claim 13, wherein the functional layer comprises lanthanum strontium manganate and yttria stabilized zirconia represented by a formula: (ZrO₂)_{0.92}(Y₂O₃)_{0.08}.
15. The SOEC of claim 11, wherein the stabilized zirconia material of the barrier layer is represented by the formula: (ZrO₂)₁₋ₓ(Y₂O₃)ₓ, wherein x ranges from 0.03 to 0.05.
16. The SOEC of claim 1, wherein:
   the functional layer comprises lanthanum strontium manganate and yttria stabilized zirconia; and
   the barrier layer consists essentially of yttria stabilized zirconia having less than 1 at% lanthanum strontium manganate.
17. The SOEC of claim 1, wherein the air-side electrode further comprises an electrically conductive contact layer located on the functional layer.
18. The SOEC of claim 1, wherein the SOEC comprises a solid oxide regenerative fuel cell which is configured to alternately operate in a fuel cell mode and an electrolysis mode.
19. A solid oxide electrolyzer cell (SOEC) stack, comprising:
   interconnects; and
   a plurality of SOECs of claim 1 separated by the interconnects.
20. The SOEC stack of claim 19, wherein the SOEC stack is configured to alternately operate in a fuel cell mode and an electrolysis mode.

## Claims

1. A solid oxide electrolyzer cell (SOEC) comprising:
a solid oxide electrolyte;
a fuel-side electrode disposed on a fuel side of the electrolyte; and
an air-side electrode disposed on an air side of the electrolyte, the air-side electrode comprising:
a barrier layer disposed on the air side of the electrolyte and comprising a stabilized zirconia material having a lower electrical conductivity than an electrical conductivity of the electrolyte; and
a functional layer disposed on the barrier layer.

2. The SOEC of claim 1, wherein:
the functional layer comprises at least 10 weight percent (wt%) electrically conductive material and at least 10 wt% ionically conductive material;
the barrier layer comprises less than 1 atomic percent (at%) of the electrically conductive material; and
the barrier layer has a lower electrical conductivity than the functional layer.

3. The SOEC of claim 2, wherein:
the ionically conductive material of the functional layer comprises a stabilized zirconia material;
the electrically conductive material comprises a metal or an electrically conductive metal oxide;
the stabilized zirconia material of the functional layer is stabilized with scandia, ceria, yttria, ytterbia, or any combination thereof;
the electrically conductive material comprises lanthanum strontium manganite.
the stabilized zirconia material of the barrier layer is stabilized with scandia, yttria, ytterbia, or any combination thereof; and
the barrier layer comprises 0 to 0.5 at% of the electrically conductive material and 0 to 1 at% ceria.

4. The SOEC of claim 1, wherein the stabilized zirconia material of the barrier layer is represented by a formula: (ZrO₂)_{0.9+y-x}(Sc₂O₃)_{0.1-y}(Y₂O₃)ₓ, wherein:
y ranges from 0 to 0.05, and
x ranges from 0.01 to (0.05+y).

5. The SOEC of claim 4, wherein the stabilized zirconia material of the barrier layer is represented by the formula: (ZrO₂)_{0.9-x}(Sc₂O₃)_{0.1}(Y₂O₃)ₓ, wherein x ranges from 0.01 to 0.05.

6. The SOEC of claim 4, wherein the stabilized zirconia material of the barrier layer is represented by the formula: (ZrO₂)_{0.91-x}(Sc₂O₃)_{0.09}(Y₂O₃)ₓ, wherein x ranges from 0.01 to 0.06.

7. The SOEC of claim 1, wherein the stabilized zirconia material of the barrier layer is represented by a formula: (ZrO₂)_{0.9+y-x}(Sc₂O₃)_{0.1-y}(Yb₂O₃)ₓ, wherein:
y ranges from 0 to 0.05, and
x ranges from 0.01 to (0.05+y).

8. The SOEC of claim 1, wherein the stabilized zirconia material of the barrier layer is represented by a formula: (ZrO₂)₁₋ₓ(Y₂O₃)ₓ, wherein x ranges from 0.02 to 0.12.

9. The SOEC of claim 8, wherein the stabilized zirconia material of the barrier layer is represented by the formula: (ZrO₂)₁₋ₓ(Y₂O₃)ₓ, wherein x ranges from 0.08 to 0.11.

10. The SOEC of claim 9, wherein the stabilized zirconia material of the barrier layer comprises (ZrO₂)_{0.92}(Y₂O₃)_{0.08}, and wherein the functional layer comprises lanthanum strontium manganate and yttria stabilized zirconia represented by a formula:
(ZrO₂)_{0.92}(Y₂O₃)_{0.08}.

11. The SOEC of claim 8, wherein the stabilized zirconia material of the barrier layer is represented by the formula: (ZrO₂)₁₋ₓ(Y₂O₃)ₓ, wherein x ranges from 0.03 to 0.05.

12. The SOEC of claim 1, wherein:
the functional layer comprises lanthanum strontium manganate and yttria stabilized zirconia; and
the barrier layer consists essentially of yttria stabilized zirconia having less than 1 at% lanthanum strontium manganate.

13. The SOEC of claim 1, wherein the air-side electrode further comprises an electrically conductive contact layer located on the functional layer.

14. A solid oxide electrolyzer cell (SOEC) stack, comprising:
interconnects; and
a plurality of SOECs of claim 1 separated by the interconnects.

15. The SOEC stack of claim 14, wherein the SOEC stack is configured to alternately operate in a fuel cell mode and an electrolysis mode.
